# EUROPEAN PATENT SPECIFICATION

(11) **EP 4 133 208 B1**
(45) Date of publication and mention of the grant of the patent: **28.05.2025**
(21) Application number: 20721441.2
(22) Date of filing: 08.04.2020
(51) Int. Cl.: F21S 43/245, F21S 43/247, F21S 43/237, F21V 8/00

(54) **LIGHT GUIDE FOR A LIGHTING DEVICE OF A VEHICLE AND LIGHTING DEVICE WITH SUCH A LIGHT GUIDE**
LICHTLEITER FÜR EINE BELEUCHTUNGSEINRICHTUNG EINES FAHRZEUGS UND BELEUCHTUNGSEINRICHTUNG MIT EINEM SOLCHEN LICHTLEITER
GUIDE DE LUMIÈRE POUR DISPOSITIF D'ÉCLAIRAGE D'UN VÉHICULE ET DISPOSITIF D'ÉCLAIRAGE DOTÉ DUDIT GUIDE DE LUMIÈRE

(43) Date of publication of application: 15.02.2023
(73) Proprietor: HELLA GMBH & CO. KGAA, 59552 Lippstadt (DE)
(72) Inventor: KÖHLER, Stefan, 59556 Lippstadt (DE)
(86) International application number: PCT/EP2020/059986
(87) International publication number: WO 2021/204373

(56) References cited:
- EP-A1- 3 190 332
- DE-A1- 102014 201 413
- US-A- 6 056 426
- US-A1- 2007 139 955
- US-A1- 2008 225 548

## Description

The present invention concerns a light guide for a lighting device of a vehicle according to the preamble of claim 1 as well as a lighting device with such a light guide.

A light guide for a lighting device of a vehicle and a lighting device with such a light guide are known from DE 10 2012 108 855 A1. The lighting device described therein comprises a light guide with an entrance surface at the front, into which the light of a light source can enter. The light guide further comprises a plurality of prism-shaped coupling-out elements opposite an exit surface through which a portion of the light entering can exit laterally. The end section of the light guide facing away from the frontal entrance surface is not disclosed in detail in DE 10 2012 108 855 A1.

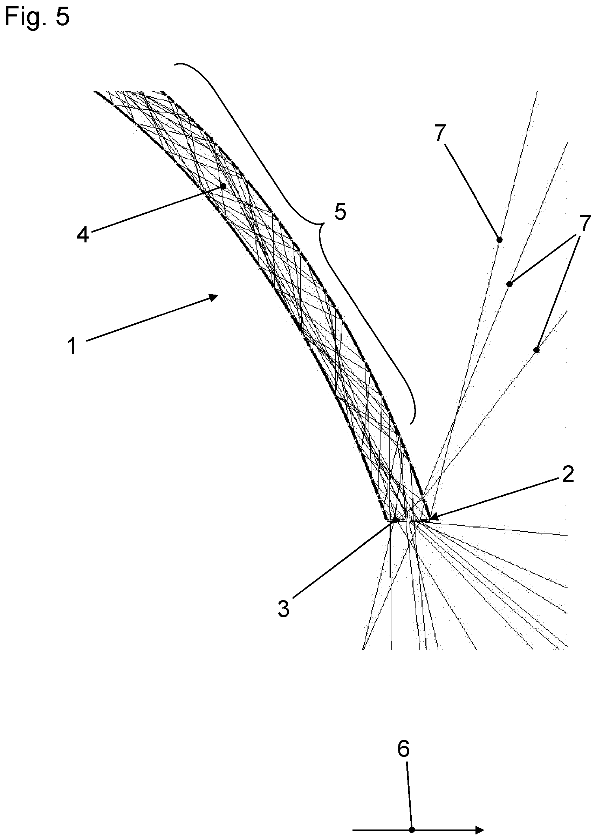

Such an end region 2 of a light guide 1, for example, has a flat surface 3 as shown in Fig. 5. With the light guide shown in Fig. 5 the light 4 can exit the light guide 1 through an exit surface 5 located on the right hand outer side. This exit surface 5 points, for example, in the forward direction of travel of the vehicle indicated by the arrow 6.

Reflections of light 4 from the flat surface 3 prove to be problematic in such a design, Fig. 5 shows some examples of light beams 7 that are reflected by the flat surface 3 and then emerge laterally from the light guide 1 in the end region 2. These light beams 7 run in unwanted directions and therefore prove to be disturbing. They also impair the appearance of the lighting device, for example by creating so-called hot spots, because the end area appears as a bright light spot.

A light guide and a lighting device of the above mentioned type are known from EP 3 190 332 A1. The lighting device described therein serves to generate at least one lighting function and/or signaling function, wherein the lighting device comprises a housing with a housing opening and a cover plate closing the housing opening, wherein an adhesive bed is provided on an edge running around the housing opening, in which adhesive bed the cover plate is inserted with a cover plate portion or with cover plate portions and is adhered to the housing by means of an adhesive, and wherein, in the housing at least one elongate light guide and at least one light source associated with the at least one light guide are arranged, wherein light of the at least one light source can be coupled into the light guide via a coupling-in region at a first end region of the at least one light guide, wherein the at least one light guide, on its front side, has a light decoupling face and, on a back side opposite the front side, has a light deflection face, such that light coupled into the at least one light guide from the at least one light source is deflected at the light deflection face and is irradiated from the light guide element via the light decoupling face, wherein the at least one light guide, in a second end region, comprises a light-permeable termination face delimiting the at least one light guide, and wherein the second end region of the light guide protrudes into the adhesive bed in such a way that the light-permeable termination face at least in regions contacts the adhesive disposed in the adhesive bed.

Another light guide for a lighting device of a vehicle is known from DE 10 2014 201 413 A1. The light guide described therein comprises a light coupling portion, an end portion remote from the light coupling portion, and a light guiding portion extending between the light coupling portion and the end portion. The light guiding section is bounded by light guiding surfaces in such a way that light coupled in through the light coupling section can be guided to the end section by total internal reflection, wherein at the light guiding section at least one decoupling element for decoupling light from the light guiding section is provided. To improve the efficiency and homogeneity of the coupled-out light, it is provided that the end section has a branching region in which the light guide can be branching region, in which the light guide merges into mouth branches of at least one return bend, which extends curved from the branching region and opens with the opening branches into the branching region in such a manner that light introduced into the return arc can be guided back into the light guide section.

Another light guide for a lighting device of a vehicle and a lighting device with such a light guide are known from US 2008/0225548 A1. The lighting device has a light guide that is elongate in shape and has a light-emitting face running in the direction of a longitudinal axis. A light-reflecting face is disposed opposite the light-emitting face, and the light-reflecting face has a plurality of prismatic cuts. Each prismatic cut includes a front face oriented at an angle B from a normal axis, the normal axis being 90 degrees from the longitudinal axis of the light pipe. The angle B is in the range of about 5 degrees to about 45 degrees and is such that it allows light to refract through at least one prismatic cut and then be internally reflected.

The problem underlying the present invention is the creation of a light guide and a lighting device of the type mentioned above, in which the portion of light escaping unwantedly from the end area is reduced.

According to the invention, this is achieved by a light guide of the type mentioned above with the characteristic features of claim 1 and by a lighting device of the type mentioned above with the characteristic features of claim 4. The dependent claims concern preferred embodiments of the invention.

According to Claim 1, the end region comprises a plurality of conical or frustoconical sections, wherein the base of the cone or the frustum of a cone faces the light guide. By an appropriate design, disturbing light beams and an impairment of the appearance of the lighting device can be largely avoided. A suitable structure can be used to reduce the portion of light reflected back which is disturbingly emitted laterally.

For example, the light guide has a conical tip in the end region. In this tapered geometry, a large portion of the light is transmitted into the tip, where a large part of it exits from the tip in a widely scattered form. A possibly back-reflected part is mostly reflected back into the light guide out of the end area and is only very unlikely to exit laterally in the end area. In this way, the disturbing light rays exiting laterally are almost completely avoided.

It is provided that the end region comprises a plurality of conical or frustoconical sections which are in particular arranged next to one another. This plurality of conical or frustoconical sections also makes it possible to largely avoid the disturbing light rays emerging laterally. However, a plurality of conical or truncated conical sections can be more space-saving than a single large conical or frustoconical end section.

It may be provided that the entrance surface is arranged at the end of the light guide remote from the end region. In general, it has been found to be practicable to couple the light into the light guide at the front end, as in the state of the art. However, laterally arranged entrance surfaces are also possible.

According to claim 4, it is intended that the lighting device comprises a light guide according to the invention.

It is possible that the light guide is arranged in the lighting device in such a way that, when the lighting device is installed in a vehicle, the light emerging from the at least one lateral exit surface can exit the vehicle, preferably at least partially forwards in the longitudinal direction of the vehicle.

It may be provided that an absorption device is arranged in front of the end region of the light guide, which can at least partially absorb the light emerging from the end of the light guide. In this way the light emerging from the end of the light guide can be prevented from propagating in undesirable directions.

Alternatively, it may be provided that a reflection device is arranged in front of the end region of the light guide, which can at least partially reflect back the light emerging from the end of the light guide, preferably reflect it back in a broadly scattered manner. The proportion of light propagating in unwanted directions can also be significantly reduced by, for example, uniform scattering in many different directions.

On the basis of the attached drawings, the invention is explained in more detail below. Thereby shows:
- Fig. 1: a schematic side view of a detail of a first embodiment of a lighting device according to the invention with an embodiment of a light guide which is not part of the invention and sketched light beams;
- Fig. 2: a schematic side view of a detail of a second embodiment of a lighting device according to the invention with an embodiment of a light guide which is not part of the invention and sketched light beams;
- Fig. 3: a schematic side view of a detail of an embodiment of a light guide according to the invention with sketched light beams;
- Fig. 4: a schematic side view of a detail of an embodiment of a light guide which is not part of the invention;
- Fig. 5: a schematic side view of a detail of an embodiment of a light guide according to the state of the art with sketched light beams.

In the figures, identical or functionally identical parts are marked with identical reference signs.

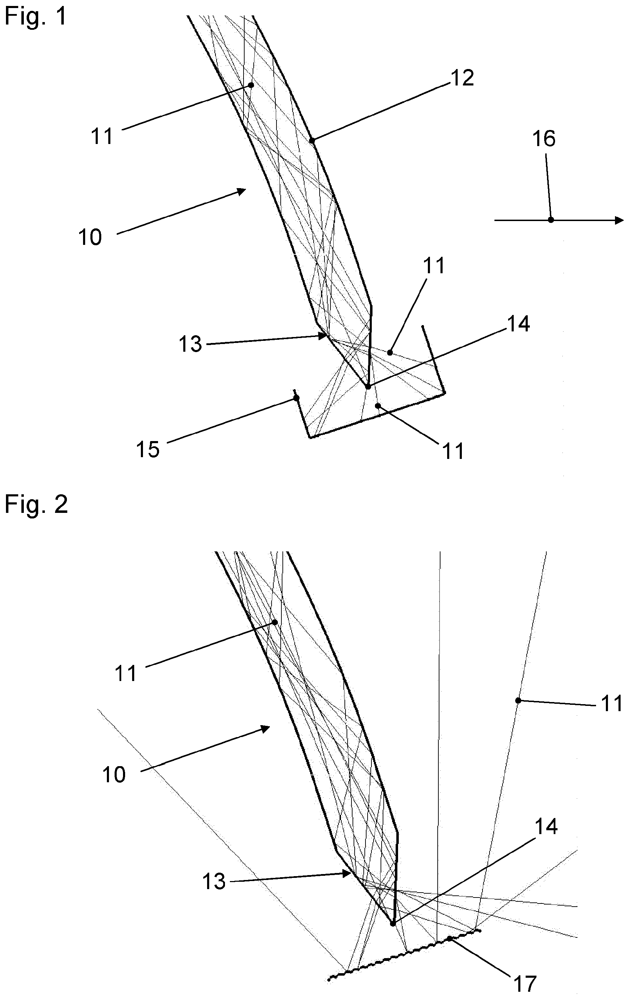

The lighting device shown in Fig. 1 comprises a light guide 10 with an entrance surface not shown, into which light 11 can enter. The entrance surface can be located in particular at the front end of the light guide 10 not shown in the illustration. Furthermore the light guide 10 comprises an exit surface 12 through which the light 11 can exit laterally. On the side of the light guide 10 opposite the exit surface 12, a non-imaged plurality of, for example, prism-shaped coupling-out elements can be arranged which deflect the light 11 in the direction of the exit surface 12.

In particular, the lighting device may be fitted to a vehicle in such a way that the exit surface 12 faces forward in the direction of travel of the vehicle indicated by the arrow 16.

The light guide 10 shown in Fig. 1 also includes an end region 13, which is conical in shape so that a large portion of the light 11 is transmitted in this conical geometry to the tip 14 of the end section 13. There the light 11 is distributed over a large solid angle range. Any reflected light is substantially reflected back out of the end region 13 into the light guide and is only very unlikely to exit laterally in the end region 13. In this way, the disturbing light rays emitted laterally are largely avoided.

The lighting device further comprises an absorption device 15 placed in front of the tip 14 of the light guide 10 and capable of absorbing the light 11 emerging from the tip 14. The absorption device 15, for example, is designed as a housing open on one side into which the light 11 can enter. The inner surfaces of the housing may be coated with absorbing materials, for example blackened.

In the version shown in Fig. 2, instead of the absorption device 15, a reflection device 17 is arranged, which can at least partially reflect back the light 11 emerging from the tip 14 of the light guide 10. The reflection device 17 can, for example, be designed as barrel optics. By means of the reflection device 17, the light 11 can, in particular, be distributed comparatively evenly over a large solid angle range, so that an impairment of the appearance of the illumination device can also be largely avoided by this measure.

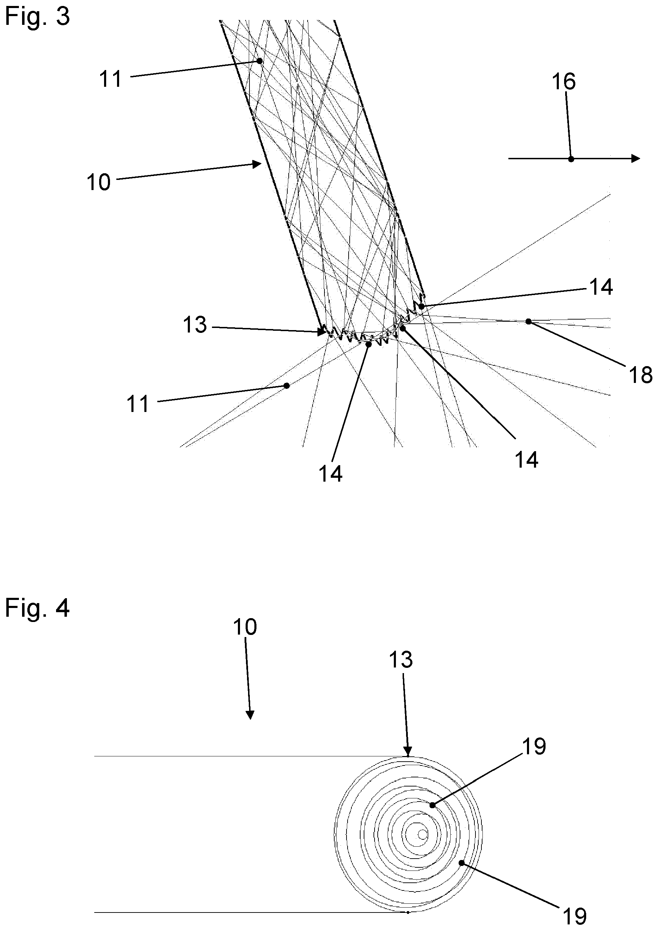

The design of a light guide 10 according to the invention shown in Fig. 3 has a number of separate cones in the end section 13 instead of a single cone. Through each of the tips 14 the light 11 emerges into a large spatial angle range, so that overall a comparatively even distribution over a large solid angle range is achieved. In particular, a portion 18 of light 11 emerging in the direction of travel 16 can make a positive contribution to the light distribution produced by the lighting device.

The design of a light guide 10 shown in Fig. 4 has a plurality of coaxially circumferential structures 19 in the end region 13 instead of a plurality of separate cones. These structures 19 can be similar to Fresnel lenses, for example. These structures 19 can also largely avoid the disturbing light rays emerging laterally and at the same time be more space-saving than a single large conical or frustoconical end region 13.

### List of reference signs

- 1: light guide
- 2: end region of the light guide 1
- 3: plane surface of the end region 2
- 4: light entering the entrance surface of light guide 1
- 5: exit surface of the light guide 1
- 6: direction of travel
- 7: light beam that emerges laterally from the light guide 1 in the end region 2
- 10: light guide
- 11: light entering the entrance surface of the light guide 10
- 12: exit surface of the light guide 10
- 13: end region of the light guide 10
- 14: tip 14 of the end region 13
- 15: absorption device
- 16: direction of travel
- 17: reflection device
- 18: light emitted in direction of travel 16
- 19: circumferential structure in the end region 13

## Claims

1. Light guide (10) for a lighting device of a vehicle, comprising
- an entrance surface into which light (11) can enter,
- at least one lateral exit surface (12) from which a portion of the light (11) that has entered can exit,
- an end region (13) through which a portion of the light (11) that has entered can exit, the end region (13) is structured and/or shaped in such a way that the portion of light (11) which laterally emerges from the region adjacent to the end region (13) after reflection at or in the end region (13) is reduced or minimised,
**characterized in that** the end region (13) comprises a plurality of conical or frustoconical sections, wherein the base of the cone or the frustum of a cone faces the light guide (10).

2. Light guide (10) according to claim 1, **characterized in that** the conical or frustoconical sections are arranged next to one another.

3. Light guide (10) according to any one of claims 1 or 2, **characterized in that** the entrance surface is arranged at the end of the light guide (10) remote from the end region (13).

4. Lighting device for a vehicle, comprising a light guide (10), **characterized in that** the light guide (10) is a light guide (10) according to any one of claims 1 to 3.

5. Lighting device according to claim 4, **characterized in that** the light guide (10) is arranged in the lighting device in such a way that, when the lighting device is installed in a vehicle, the light (11) emerging from the at least one lateral exit surface can exit the vehicle, preferably at least partially forwards in the longitudinal direction of the vehicle.

6. Lighting device according to one of claims 4 or 5, **characterized in that** an absorption device (15) is arranged in front of the end region (13) of the light guide (10), which can at least partially absorb the light (11) emerging from the end of the light guide (10).

7. Lighting device according to one of claims 4 or 5, **characterized in that** a reflection device (19) is arranged in front of the end region (13) of the light guide (10), which can at least partially reflect back the light (11) emerging from the end of the light guide (10), preferably reflect it back in a broadly scattered manner.

## Patentansprüche

1. Lichtleiter (10) für eine Beleuchtungseinrichtung eines Fahrzeugs, umfassend
- eine Eintrittsfläche, in die Licht (11) eintreten kann,
- mindestens eine seitliche Austrittsfläche (12), aus der ein Teil des Lichts (11), das eintrat, austreten kann,
- einen Abschlussbereich (13), durch den ein Teil des Lichts (11), das eintrat, austreten kann, wobei der Abschlussbereich (13) in einer solchen Weise strukturiert und/oder geformt ist, dass der Teil des Lichts (11), der seitlich aus dem Bereich, der dem Abschlussbereich (13) benachbart ist, austritt, nach Reflexion an oder in dem Abschlussbereich (13) reduziert oder minimiert ist,
**dadurch gekennzeichnet, dass** der Abschlussbereich (13) eine Vielzahl von kegelförmigen oder kegelstumpfförmigen Abschnitten umfasst, wobei die Basis des Kegels oder der Stumpf eines Kegels dem Lichtleiter (10) zugewandt ist.

2. Lichtleiter (10) nach Anspruch 1, **dadurch gekennzeichnet, dass** die kegelförmigen oder kegelstumpfförmigen Abschnitte nebeneinander angeordnet sind.

3. Lichtleiter (10) nach einem der Ansprüche 1 oder 2, **dadurch gekennzeichnet, dass** die Eintrittsfläche am Ende des Lichtleiters (10), von Abschlussbereich (13) entfernt, angeordnet ist.

4. Beleuchtungseinrichtung für ein Fahrzeug, umfassend einen Lichtleiter (10), **dadurch gekennzeichnet, dass** der Lichtleiter (10) ein Lichtleiter (10) nach einem der Ansprüche 1 bis 3 ist.

5. Beleuchtungseinrichtung nach Anspruch 4, **dadurch gekennzeichnet, dass** der Lichtleiter (10) in einer solchen Weise in der Beleuchtungseinrichtung angeordnet ist, dass dann, wenn die Beleuchtungseinrichtung in einem Fahrzeug installiert ist, das aus der mindestens einen seitlichen Austrittsfläche austretende Licht (11) das Fahrzeug verlassen kann, vorzugsweise mindestens teilweise vorwärts in der Längsrichtung des Fahrzeugs.

6. Beleuchtungseinrichtung nach einem der Ansprüche 4 oder 5, **dadurch gekennzeichnet, dass** eine Absorptionseinrichtung (15) vor dem Abschlussbereich (13) des Lichtleiters (10) angeordnet ist, die das aus dem Ende des Lichtleiters (10) austretende Licht (11) mindestens teilweise absorbieren kann.

7. Beleuchtungseinrichtung nach einem der Ansprüche 4 oder 5, **dadurch gekennzeichnet, dass** eine Reflexionseinrichtung (19) vor dem Abschlussbereich (13) des Lichtleiters (10) angeordnet ist, die das aus dem Ende des Lichtleiters (10) austretende Licht (11) mindestens teilweise zurückreflektieren kann, wobei sie es vorzugsweise in einer breit gestreuten Weise zurückreflektiert.

## Revendications

1. Guide de lumière (10) pour dispositif d'éclairage d'un véhicule comprenant
- une surface d'entrée par laquelle peut la lumière (11) peut entrer,
- au moins une surface de sortie latérale (12) par laquelle une partie de la lumière (11) entrée peut sortir,
- une zone d'extrémité (13) par laquelle une partie de la lumière (11) entrée peut sortir, la zone d'extrémité (13) étant structurée et/ou formée de manière à réduire ou minimiser la partie de la lumière (11) qui émerge latéralement de la zone adjacente à la zone d'extrémité (13) après réflexion sur ou dans la zone d'extrémité (13),
**caractérisé en ce que** la zone d'extrémité (13) comprend plusieurs sections coniques ou tronconiques et dans lequel la base du cône ou le tronc d'un cône est orienté vers le guide de lumière (10).

2. Guide de lumière (10) selon la revendication 1, **caractérisé en ce que** les sections coniques ou tronconiques sont disposées les unes à côté des autres.

3. Guide de lumière (10) selon l'une des revendications 1 ou 2, **caractérisé en ce que** la surface d'entrée est disposée à l'extrémité du guide de lumière (10) éloignée de la zone d'extrémité (13).

4. Dispositif d'éclairage pour véhicule comprenant un guide de lumière (10) **caractérisé en ce que** le guide de lumière (10) est un guide de lumière (10) selon l'une des revendications 1 à 3.

5. Dispositif d'éclairage selon la revendication 4, **caractérisé en ce que** le guide de lumière (10) est disposé dans le dispositif d'éclairage de telle sorte que, lorsque le dispositif d'éclairage est installé dans un véhicule, la lumière (11) sortant d'au moins une surface de sortie latérale peut sortir du véhicule, de préférence au moins partiellement vers l'avant dans la direction longitudinale du véhicule.

6. Dispositif d'éclairage selon l'une des revendications 4 ou 5, **caractérisé en ce qu'**un dispositif d'absorption (15) est disposé devant la zone d'extrémité (13) du guide de lumière (10) et peut absorber au moins partiellement la lumière (11) émergeant de l'extrémité du guide de lumière (10).

7. Dispositif d'éclairage selon l'une des revendications 4 ou 5, **caractérisé en ce qu'**un dispositif de réflexion (19) est disposé devant la zone d'extrémité (13) du guide de lumière (10) et peut réfléchir au moins partiellement la lumière (11) émergeant de l'extrémité du guide de lumière (10), de préférence la réfléchir d'une manière largement dispersée.
